# EUROPEAN PATENT APPLICATION

(11) **EP 4 563 871 A1**
(43) Date of publication of application: **04.06.2025**
(21) Application number: 24214146.3
(22) Date of filing: 20.11.2024
(51) Int. Cl.: F16N 11/04, F16N 19/00

(54) **INTEGRATED LEVEL SENSOR FOR LUBRICANT PUMP ASSEMBLY**

(30) Priority: 29.11.2023 US 202363603950 P
(71) Applicant: Graco Minnesota Inc., Minneapolis, MN 55413-1894 (US)
(72) Inventor: NIJAGUNA, Suresha Saragur, Plymouth (US); KUSCHEL, Anthony J., Coon Rapids (US); WALTHER, Jack M., Zimmerman (US); MATTOX, Connor W., St. Paul (US); IGO, Chad G., Minneapolis (US)
(74) Representative: Lewis Silkin LLP

(57) **Abstract**

A lubrication pump assembly includes a fill tube and a sensor tube located within the fill tube. The sensor tube has a plurality of sensors disposed within the sensor tube and the sensors are configured to generate signals when triggered by a magnetic indicator, indicating a fill level of lubricant within the lubrication pump assembly. A follower within the lubrication pump assembly travels up and down within the lubrication pump assembly on a top of the lubricant. The fill tube is disposed between the sensor tube and the magnetic indicator.

## Description

### BACKGROUND

The present disclosure relates generally to lubrication systems. More particularly, the disclosure relates to lubricant level sensing for a lubricant reservoir.

Machinery often requires lubrication to function. Seals, pistons, bearings, and other parts can require lubrication with small, measured amounts of grease or oil over short, frequent time intervals to prevent wear, corrosion, over-lubrication, or under-lubrication. Lubricant is injected at specific locations that require lubrication by lubricant metering devices. A local lubricant reservoir can store a volume of the lubricant until the lubricant is to be applied. The lubricant reservoir holds a limited volume of lubricant and must be refilled from a larger lubricant source when the lubricant volume within the reservoir is low. Lubricant is drawn from the lubricant reservoir and pumped to the lubricant metering devices via a lubrication line. The lubricant metering devices are configured to inject a set, small amount of lubricant to the specific location within the machinery once the pressure within the lubrication line reaches a predetermined threshold level.

### SUMMARY

According to an aspect of the present disclosure, a lubricant pump assembly that includes a base, a reservoir housing supported by the base, a lubricant chamber disposed at least partially within the reservoir housing. The lubricant pump assembly further includes a follower disposed within the reservoir housing, the follower configured to rise and fall with a lubricant fill level within the lubricant chamber, a fill tube extending downward from a reservoir housing top, the fill tube having a first tube end and a second tube end, wherein the fill tube extends through the follower and the fill tube is configured to output the lubricant into the lubricant chamber. Further, the lubricant pump includes a sensor assembly including a sensor tube having a plurality of sensors disposed within the sensor tube, the sensor tube disposed at least partially within the fill tube, and a magnetic indicator supported by the follower such that the magnetic indicator moves with the follower relative to the sensor tube and the fill tube, wherein the magnetic indicator is configured to trigger the plurality of sensors to cause the plurality of sensors to output signals indicative of the lubricant fill level.

According to an additional or alternative aspect of the present disclosure, a lubricant pump assembly that includes a base including an outlet port, an outlet pump disposed within the base, wherein the outlet pump is configured to discharge a lubricant through the outlet port. The lubricant pump assembly further includes a reservoir housing supported by the base, a fill tube defining a fill tube entrance and a fill tube exit, the fill tube disposed within the reservoir housing, wherein the fill tube is configured to receive the lubricant at the fill tube entrance, a follower plate disposed within the reservoir housing, the follower plate comprising an outer seal that engages with a side wall of the reservoir housing, a guide bore through which the fill tube extends, and a vent valve configured to allow for air to flow between an area above the follower plate and an area below the follower plate. Further, the lubricant pump assembly includes a magnetic indicator supported by the follower plate. Even further, the lubricant pump assembly includes an auto-fill shut off assembly comprising an AFSO housing including an AFSO side, a valve disposed at least partially within the AFSO housing comprising a valve stem and a valve seat, wherein the valve stem is configured to engage the valve seat when the valve is in a closed state and to disengage from the valve seat when the valve is in an open state. Even further still an AFSO intake disposed on the AFSO side and an AFSO bore extending into the AFSO housing from a bottom of the AFSO housing, wherein the AFSO bore is configured to receive the fill tube, wherein the valve seat is disposed between the AFSO intake and the AFSO bore. Moreover, the lubricant pump assembly further includes a sensor assembly having a sensor tube enclosing a plurality of sensors, the sensor tube disposed at least partially within the fill tube, wherein the magnetic indicator is configured to trigger the plurality of sensors to cause the plurality of sensors to output signals indicative of a lubricant fill level, wherein the plurality of sensors are fluidly isolated from the lubricant by the sensor tube, the fill tube exit is configured to output the lubricant beneath the follower plate, and the follower plate is configured to sit on a top of the lubricant when the lubricant is disposed within the reservoir housing.

According to another additional or alternative aspect of the present disclosure, a method of determining a lubricant pump assembly, the method including, flowing a lubricant into the lubricant pump assembly, flowing the lubricant down a space between an interior of a fill tube and an exterior of a sensor tube. Further, the method includes releasing the lubricant out from the fill tube and into a lubricant chamber and raising a follower plate disposed within a reservoir housing of the lubricant pump assembly via the lubricant beneath the follower plate sensing the lubricant fill level within the reservoir housing by signals received from a plurality of sensors disposed within the sensor tube, wherein a magnetic indicator supported by the follower plate triggers the plurality of sensors disposed within the sensor tube to output the signals.

### Paragraphs of advantage

According to another aspect of the present invention, there is provided a lubricant pump assembly comprising: a base; a reservoir housing supported by the base; a lubricant chamber disposed at least partially within the reservoir housing; a follower disposed within the reservoir housing, the follower configured to rise and fall with a lubricant fill level within the lubricant chamber; a fill tube extending downward from a reservoir housing top, the fill tube having a first tube end and a second tube end, wherein the fill tube extends through the follower and the fill tube is configured to output the lubricant into the lubricant chamber; a sensor assembly including a sensor tube having a plurality of sensors disposed within the sensor tube, the sensor tube disposed at least partially within the fill tube; and a magnetic indicator supported by the follower such that the magnetic indicator moves with the follower relative to the sensor tube and the fill tube, wherein the magnetic indicator is configured to trigger the plurality of sensors to cause the plurality of sensors to output signals indicative of the lubricant fill level.

Preferably, the lubricant pump assembly further comprises a spring disposed within the reservoir housing, the spring interfacing with the follower to bias the follower downward within the reservoir.

Preferably, the follower has a single guide bore through which both the fill tube and the sensor tube extend.

Preferably, the follower does not include multiple guide bores.

Preferably, the lubricant pump assembly further comprises an auto-fill shut off assembly disposed on the reservoir housing top, the auto-fill shut off assembly comprising: an AFSO housing wherein the AFSO housing defines a lubricant pathway that comprises an AFSO intake and an AFSO bore; and a valve disposed within the AFSO housing.

Preferably, the follower is a follower plate that engages with a reservoir housing side wall via an outer seal, the follower plate separating the lubricant chamber and a dry portion within the reservoir housing.

Preferably, the follower plate is configured to actuate the valve to a closed state when the lubricant fill level is in a full state.

Preferably, the fill tube is mounted to the AFSO housing.

Preferably, the sensor tube extends into the AFSO housing.

Preferably, the sensor tube extends out of the first tube end of the fill tube and fully through the AFSO housing.

Preferably, a sensor tube surface comprises a 32-microinch surface finish.

Preferably, the sensor tube does not interface with a dynamic seal.

Preferably, the sensor tube interfaces with a single static seal disposed within and supported by the AFSO housing.

Preferably, the sensor tube and the fill tube are disposed coaxially.

Preferably, the sensor tube and the fill tube are coaxial with the follower plate. Preferably, the fill tube is formed from a non-ferrous material.

Preferably, the magnetic indicator comprises a plurality of magnets disposed within a non-ferrous ring.

Preferably, the sensor tube is closed off at a sensor tube end within the lubricant chamber.

Preferably, a ratio of a diameter of an interior surface of the fill tube to a diameter of an exterior surface of the sensor tube is at least 10:7.

Preferably, the magnetic indicator is disposed radially outside of the fill tube and is spaced from the sensor tube by a gap comprising a thickness of the fill tube and a flow gap defined by a distance between the exterior surface of the sensor tube and the interior surface of the fill tube.

Preferably, the sensor tube is exposed to the lubricant within the fill tube.

Preferably, the lubricant pump assembly further comprises a pump disposed within the base and fluidly connected to the lubricant chamber to remove lubricant from the lubricant chamber.

Preferably, the lubricant pump assembly further comprises a locator disposed at the second tube end, the locator interfacing with the fill tube and the sensor tube to concentrically align the sensor tube and the fill tube.

Preferably, the follower is a follower plate that engages with a side wall of the reservoir housing via an outer seal, the follower plate separating a wet portion and a dry portion within the reservoir housing.

According to another aspect of the present invention, there is provided a lubricant pump assembly, the lubricant pump assembly comprising: a base including an outlet port; an outlet pump disposed within the base, wherein the outlet pump is configured to discharge a lubricant through the outlet port; a reservoir housing supported by the base; a fill tube including a fill tube entrance and a fill tube exit, the fill tube disposed within the reservoir housing, wherein the fill tube is configured to receive the lubricant at the fill tube entrance; a follower plate disposed within the reservoir housing, the follower plate comprising: an outer seal that engages with a side wall of the reservoir housing; a guide bore through which the fill tube extends; and a vent valve configured to allow for air to flow between an area above the follower plate and an area below the follower plate; a magnetic indicator supported by the follower plate; an auto-fill shut off assembly comprising: an AFSO housing including an AFSO side; a valve disposed at least partially within the AFSO housing comprising a valve stem and a valve seat, wherein the valve stem is configured to engage the valve seat when the valve is in a closed state and to disengage from the valve seat when the valve is in an open state; an AFSO intake disposed on the AFSO side; and an AFSO bore extending into the AFSO housing from a bottom of the AFSO housing, wherein the AFSO bore is configured to receive the fill tube, wherein the valve seat is disposed between the AFSO intake and the AFSO bore; and a sensor assembly having a sensor tube enclosing a plurality of sensors, the sensor tube disposed at least partially within the fill tube, wherein the magnetic indicator is configured to trigger the plurality of sensors to cause the plurality of sensors to output signals indicative of a lubricant fill level, wherein the plurality of sensors are fluidly isolated from the lubricant by the sensor tube, the fill tube exit is configured to output the lubricant beneath the follower plate, and the follower plate is configured to sit on a top of the lubricant when the lubricant is disposed within the reservoir housing.

Preferably, a ratio of a diameter of an interior surface of the fill tube to a diameter of an exterior surface of the sensor tube is at least 10:7.

According to another aspect of the present invention, there is provided a method of determining a lubricant fill level within a lubricant pump assembly, the method comprising: flowing a lubricant into the lubricant pump assembly; flowing the lubricant down a space between an interior of a fill tube and an exterior of a sensor tube; releasing the lubricant out from the fill tube and into a lubricant chamber; raising a follower plate disposed within a reservoir housing of the lubricant pump assembly via the lubricant beneath the follower plate; and sensing the lubricant fill level within the reservoir housing by signals received from a plurality of sensors disposed within the sensor tube, wherein a magnetic indicator supported by the follower plate triggers the plurality of sensors disposed within the sensor tube to output the signals.

### BRIEF DESCRIPTION OF THE DRAWINGS

FIG. 1 is a block diagram of a lubricant pump assembly.
FIG. 2 is an isometric view of a lubricant pump assembly.
FIG. 3A is a cross-sectional view of a lubricant pump assembly taken along line A-A of FIG 2.
FIG. 3B is a cross-sectional view of a lubricant pump assembly taken along line B-B of FIG 2.
FIG. 4 is a plan view of a magnetic indicator that can be used within a lubricant pump assembly.

### DETAILED DESCRIPTION

In general, the present disclosure relates to the use of a level sensor and auto-fill shutoff assembly (AFSO) for a lubricant pump assembly configured to distribute lubricant, such as grease or oil. The AFSO is disposed on top of a reservoir housing of the lubricant pump and is configured to receive a lubricant through a lubricant intake, the lubricant flowing to a fill tube that outputs the lubricant into the reservoir housing. The level sensor includes a plurality of sensors that are disposed within a sensor tube that extends downward from the AFSO. The sensor tube is disposed at least partially within the fill tube and can, in some examples, be coaxial with the fill tube. This placement of the sensor tube within the fill tube provides for simplification of overall design and fewer points of leakage and/or pinch points. When the fill tube releases lubricant, such as at the bottom of the reservoir, the rising lubricant level displaces a follower upwards within the housing. The follower supports a magnetic indicator and the magnetic indicator triggers the sensors within the sensor tube as the follower displaces within the reservoir. Signals provided by the sensors indicate the lubricant level within the reservoir. In some examples, once the lubricant hits a full level within the reservoir, the follower is configured to actuate a valve to a closed state within the AFSO to cease flow of lubricant to the fill tube and to the reservoir. The level sensor can provide lubricant level information based on a falling lubricant level as the lubricant is drawn out of the lubricant pump to lubricate mechanical components within a system. The information regarding the falling lubricant level can be utilized to determine when to refill the lubricant reservoir, thus providing more efficient use of resources, allowing for advanced scheduling, and preventing the lubricant pump from running dry.

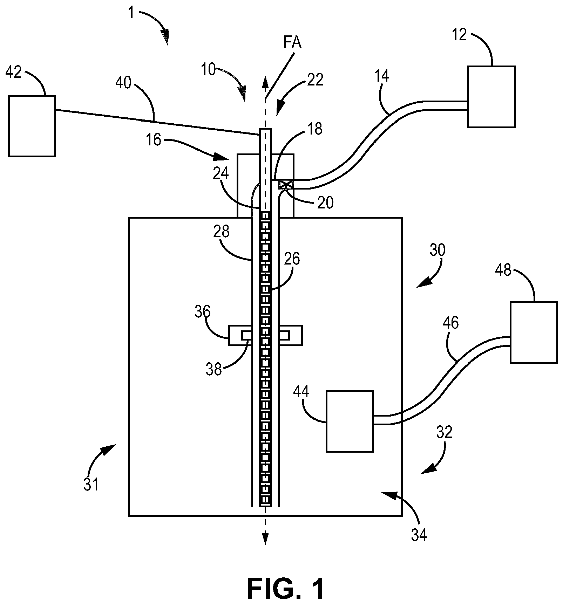

FIG. 1 is a block diagram of a lubricant system 1. The lubricant system 1 includes lubricant pump assembly 10, input pump 12, input hose 14, auto-fill shut off assembly 16 (AFSO 16), AFSO channel 18, which can also be referred to as lubricant pathway, valve 20, sensor assembly 22, fill tube 28, fill tube axis FA, reservoir housing 30, body 31, base 32, lubricant chamber 34, follower 36, magnetic indicator 38, control 42, output pump 44, output hose 46, and lubricated components 48. Sensor assembly 22 includes sensor tube 24, sensors 26, and sensor relay 40.

The lubricant system 1 is configured to store and dispense a lubricant, such as grease or oil, among other options. Lubricant pump assembly 10 is configured to receive the lubricant from input pump 12 which is configured to draw the lubricant from a lubricant source and transport the lubricant to lubricant pump assembly 10 via input hose 14. Input pump 12 is connected to input hose 14, and input hose 14 is fluidly connected to AFSO 16. AFSO channel 18 is disposed within AFSO 16. AFSO channel 18 can have an intake to connect with input hose 14. Valve 20 is at least partially disposed within AFSO channel 18 downstream along a direction of flow from the intake that is configured to receive the lubricant. Valve 20 can be in a closed state or an open state. When valve 20 is in the closed state, valve 20 is configured to cease flow of the lubricant from the intake to the fill tube 28.

Sensor assembly 22 is at least partially disposed within AFSO 16. It is understood that sensor assembly 22 can include multiple sensors 26 in various examples that are disposed within sensor tube 24. Sensor assembly 22 is at least partially disposed within fill tube 28. Sensor assembly 22 can be supported by AFSO 16. Sensor assembly 22 can extend up through AFSO 16 in various examples. Sensor assembly 22 extends into reservoir housing 30 and can extend into lubricant chamber 34. In some examples, sensor tube 24 of sensor assembly 22 and fill tube 28 can be disposed coaxially. In these examples, sensor tube 24 can be also be coaxial with follower 36, in which fill tube 28 is also coaxial with follower 36. Both fill tube 28 and sensor assembly 22 can be centered around fill tube axis FA. In other examples, sensor tube 24 can be disposed at least partially within fill tube 28 but not coaxial with fill tube 28.

Fill tube 28 is configured to receive the lubricant from AFSO channel 18. Fill tube 28 is disposed beneath AFSO 16. AFSO 16 is disposed on a top of reservoir housing 30. Fill tube 28 extends into reservoir housing 30. Fill tube 28 is configured to release the lubricant into lubricant chamber 34. Lubricant chamber 34 defines an available volume that the lubricant can occupy. Lubricant chamber 34 is at least partially defined by reservoir housing 30. Lubricant chamber 34 can at least partially be defined by base 32. Reservoir housing 30 is disposed on a top of base 32. Base 32 can support reservoir housing 30. Body 31 includes reservoir housing 30 and base 32.

Follower 36 is disposed within reservoir housing 30 and is configured to rise and fall with a changing lubricant fill level within reservoir housing 30. Follower 36 at least partially surrounds fill tube 28 and supports magnetic indicator 38. Follower 36 can, in some examples, be a follower plate. In other examples follower 36 can be a follower plate that extends to engage with an interior surface of reservoir housing 30. For example, follower 36 can include one or more seals that engage with and seal against the interior surface of the reservoir housing 30. Follower 36 can be configured to float on a top of lubricant such that a rising lubricant level causes follower 36 to rise within lubricant chamber 34 and a falling lubricant level causes follower 36 to fall within lubricant chamber 34. In examples in which follower 36 extends fully to a side wall of the reservoir housing, as the lubricant fills lubricant chamber 34, lubricant chamber 34 grows in volume because of follower 36 raising with the lubricant level. In examples in which follower 36 does not extend out to the side wall of reservoir housing, an available volume for the lubricant to occupy can include an entirety of reservoir housing 30 and a wet portion of base 32.

Follower 36 can be disposed fully annularly around fill tube 28. Follower 36 is configured to be in sliding communication with fill tube 28. Follower 36 can be guided by fill tube 28 such that follower 36 can be considered to ride on fill tube 28 as follower 36 rises and falls with the lubricant fill level. Follower 36 does not directly interface with sensor tube 24. Follower 36 is spaced a distance radially outward with respect to fill tube axis FA from sensor tube 24. Follower 36 can support magnetic indicator 38.

Magnetic indicator 38 includes one or more permanent magnets. Sensors 26 are disposed within sensor tube 24. Magnetic indicator 38 is configured to trigger sensors 26 disposed within sensor tube 24 of sensor assembly 22. Magnetic indicator 38 outputs magnetic fields that are sensed by sensors 26. Magnetic indicator 38 is configured to rise and fall with the changing lubricant level within lubricant chamber 34 by being supported by follower 36. The changing position of magnetic indicator 38 changes the location of the magnetic force on sensors 26, and sensors 26 output signals based on the sensed magnetic fields. The signals output by sensors 26 provide information regarding the lubricant level within lubricant chamber 34. In the example shown, magnetic indicator 38 is supported by follower 36 such that magnetic indicator 38 travels with follower 36. Magnetic indicator 38 is not in direct contact with sensor tube 24. Instead, magnetic indicator 38 is disposed outside of fill tube 28 such that magnetic indicator 38 is spaced from sensor tube 24 by a flow gap within fill tube 28 between an exterior of sensor tube 24 and an interior of fill tube 28 and by a thickness of fill tube 28.

Sensor tube 24 can be closed such that the interior of sensor tube 24 is fluidly isolated from the lubricant within reservoir housing 30. Sensor relay 40 extends from a portion of sensor tube 24 disposed outside of reservoir housing 30. In the example shown, the sensor relay 40 is connected to sensor tube 24 at a location outside of a housing of AFSO 16. Sensor relay 40 is operatively connected to sensors 26, electrically and/or communicatively, to receive sensor signals from sensors 26.

Sensor relay 40 is configured to convey the sensor signals to control 42. Sensor relay 40 is connected to sensor tube 24 and is configured to transmit signals from sensors 26 that are disposed within sensor tube 24 to control 42. Sensor assembly 22 is configured to output level signals indicating the lubricant level within lubricant chamber 34. Sensor assembly 22 is operatively connected, electrically and/or communicatively, to control 42 to provide the level signals to control 42. In the example shown, sensor assembly 22 is operatively connected to control 42 via sensor relay 40, which can be formed as a wired or wireless connection between sensor assembly 22 and control 42.

Control 42 can be, e.g., a microprocessor, a digital signal processor (DSP), an application specific integrated circuit (ASIC), a field-programmable gate array (FPGA), or other equivalent discrete or integrated logic circuitry configured to implement functionality and/or process instructions. In some examples, control 42 can include onboard computer-readable memory. Computer-readable memory of control 42 can be configured to store information during operation of lubricant pump assembly 10. In some examples, the computer-readable memory can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, the computer-readable memory can include temporary memory elements, meaning that a primary purpose of such computer-readable memory elements is not long-term storage. In certain examples, temporary memory elements can be described as volatile memory, meaning that the temporary memory elements do not maintain stored contents when electrical power to control 42 is turned off. Examples of volatile memories can include random access memories (RAM), dynamic random access memories (DRAM), static random access memories (SRAM), and other forms of volatile memories.

In some examples, the computer-readable memory of control 42 is used to store program instructions for execution by control 42. For instance, computer-readable memory of control 42 can be used by software, firmware, or applications executed by control 42 during operation of lubricant pump 10. Computer-readable memory of control 42 can, in some examples, also include non-volatile storage elements configured to maintain stored contents when electrical power to lubricant pump 10 is turned off. Examples of such non-volatile storage elements can include flash memories, forms of electrically programmable memories (EPROM), electrically erasable and programmable (EEPROM) memories, or other forms of non-volatile storage elements.

Control 42 can be configured to provide a lubricant level indication regarding the sensed lubricant level within lubricant chamber 34. In some examples, control 42 includes a user interface, which can be any graphical and/or mechanical interface that enables user interaction with control 42, such as to schedule refill times for lubricant chamber 34, or to remove the lubricant from lubricant chamber 34.

Output pump 44 is configured to draw the lubricant from lubricant chamber 34. Output pump 44 can be disposed fully or partially within base 32, fully or partially within reservoir housing 30, and/or fully or partially outside of base 32 and reservoir housing 30. Output pump 44 can connect to output hose 46 to provide lubricant downstream through output hose 46. Output hose 46 can be fluidically connected to output pump 44 and configured to dispense the lubricant to lubricated component 48.

During fill operation, input hose 14 is connected to AFSO 16 of lubricant pump assembly 10 to fluidly connect input pump 12 with lubricant pump assembly 10. The lubricant is first received through AFSO 16. The lubricant flows though the open valve 20 and to fill tube 28. The lubricant then travels down fill tube 28 at a first tube end from AFSO 16, and while the lubricant travels down fill tube 28, the lubricant surrounds sensor tube 24 which is disposed at least partially within fill tube 28. As such, both an exterior surface of sensor tube 24 and an interior surface of fill tube 28 are in direct contact with the lubricant flowing within fill tube 28. The lubricant and sensor tube 24 are disposed within fill tube 28 as the lubricant travels down to fill into lubricant chamber 34. The lubricant exits from fill tube 28 through a fill tube exit at a second tube end and flows into lubricant chamber 34 to fill lubricant chamber 34. The fill tube exit can be formed as an open end of fill tube 28 opposite the end that receives the lubricant from AFSO 16, and can additionally or alternatively be formed as one or more ports extending through fill tube 28, among other options. As the lubricant flows down fill tube 28, around sensor tube 24, and out of the fill tube exit, the lubricant fills lubricant chamber 34 and the lubricant fill level within lubricant chamber 34 begins to rise. As such, during fill operations, the lubricant contacting sensor tube 24 travels in an opposite direction (downward) from the lubricant filling within lubricant chamber 34 (upwards).

During lubricating operations, output pump 44 draws lubricant from lubricant chamber 34 and drives that lubricant downstream through output hose 46 to lubricated component 48. Output pump 44 drawing the lubricant from lubricant chamber 34 causes the lubricant fill level within lubricant chamber 34 to fall.

Magnetic indicator 38 is configured to rise with the rising lubricant level within lubricant chamber 34 and is configured to fall with the falling lubricant level within lubricant chamber 34. Magnetic indicator 38 is configured to shift axially along fill tube axis FA with the variable lubricant fill level. As such, magnetic indicator 38 is configured to shift relative to fill tube 28, sensor tube 24, and sensors 26. Depending on how much of lubricant chamber 34 the lubricant is occupying, magnetic indicator 38 will trigger differing sensors 26 disposed along an interior of sensor tube 24 by magnetic fields output from magnetic indicator 38. The sensors 26 transmit signals to control 42 via sensor relay 40. The signals indicate the lubricant level of the lubricant within lubricant pump assembly 10.

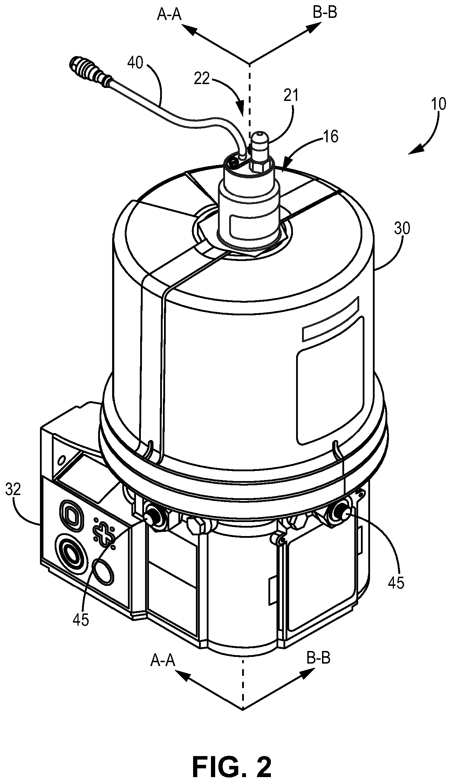

FIG. 2 is an isometric view of lubricant pump assembly 10. Lubricant pump assembly 10 includes AFSO 16, valve 20 (not shown), signal indicator 21, sensor assembly 22, reservoir housing 30, and base 32. Outlet ports 45 of base 32 are shown. A portion of sensor assembly 22 is shown. Sensor relay 40 of sensor assembly 22 is shown. Sensor assembly 22 extends through reservoir housing 30 and AFSO 16. Signal indicator 21 extends out and on top of AFSO 16 from valve 20. Valve 20 is disposed within AFSO 16. AFSO 16 is disposed on a top of reservoir housing 30. Reservoir housing 30 is supported by base 32. Reservoir housing 30 receives a lubricant through AFSO 16, and the lubricant can be drawn from reservoir housing 30 through base 32 for use on or in a separate component, which in one example could be gears, bearings, axles, cylinders, joints, pistons, elastomeric seals such as o-rings, among other options. A fill level of the lubricant within lubricant pump assembly 10 can be determined by signals transmitted through sensor relay 40. The fill level can also be referred to as a lubricant fill level or a lubricant level.

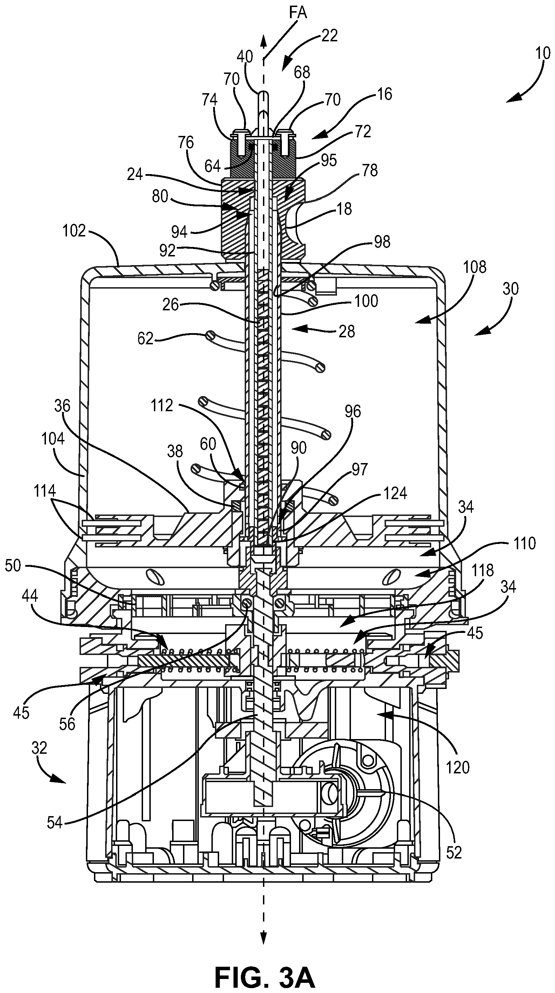

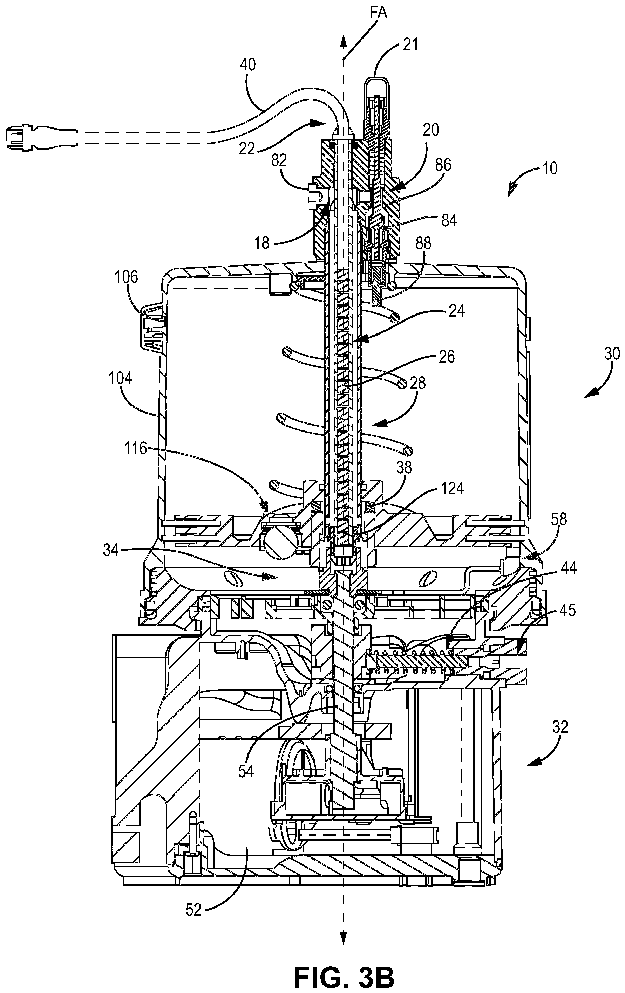

FIG. 3A is a cross-sectional view of lubricant pump assembly 10 taken along line A-A of FIG 2. FIG. 3B is a cross-sectional view of lubricant pump assembly 10 taken along line B-B in FIG. 2. FIGS. 3A and 3B are discussed together and with continued reference to FIGS. 1 and 2.

Lubricant pump assembly 10 includes AFSO 16, valve 20, signal indicator 21, sensor assembly 22, fill tube 28, reservoir housing 30, base 32, lubricant chamber 34, follower 36, magnetic indicator 38, outlet pump 44, ricer plate 50, motor 52, drive shaft 54, bearing 56, stir assembly 58, inner seal 60, spring 62, static seal 64, fasteners 70, and locator 124. AFSO 16 includes AFSO channel 18, valve 20, AFSO housing 72, AFSO top 74, AFSO side 76, AFSO intake 78, AFSO bore 80, and lubricant port 82. Valve 20 includes valve stem 84, valve seat 86, and pin 88. Sensor assembly 22 includes sensor tube 24, sensors 26, sensor relay 40, mount plate 68, sensor tube end 90, and sensor tube surface 92. Fill tube 28 includes fill tube entrance 94, first tube end 95, fill tube exit 96, second tube end 97, fill tube interior surface 98, and fill tube exterior surface 100. Reservoir housing 30 includes reservoir housing top 102, reservoir housing side wall 104, weep hole 106, housing dry portion 108, and housing wet portion 110. Follower 36 includes guide bore 112, outer seals 114, and vent valve 116. Base includes base wet portion 118, base dry portion 120, and outlet ports 45.

In lubricant pump assembly 10, AFSO 16 is disposed on reservoir housing top 102, and reservoir housing 30 is supported by base 32. Disposed at least partially within AFSO 16 is valve 20. Valve seat 86 can be formed by AFSO housing 72, among other options. In some examples, valve 20 comprises valve stem 84, valve seat 86, and pin 88. In some examples, valve stem 84 can extend out AFSO top 74 into signal indicator 21. In these examples, signal indicator 21 can be disposed on AFSO top 74. When lubricant pump assembly 10 is in a full state, valve stem 84 extending into signal indicator 21 visually indicates that lubricant pump assembly 10 is full. Valve stem 84 extends into signal indicator 21 with valve 20 in a closed state. In the closed state, an enlarged portion of valve stem 84 engages valve seat 86, and valve 20 shuts off flow of the lubricant into lubricant pump assembly 10. In the examples shown, valve 20 shifts to the closed state by pin 88 being engaged by follower 36 and being driven upwards by follower 36. Pin 88 extends out a bottom of AFSO housing 72 and into reservoir housing 30. Pin 88 and valve stem 84 can be integrally formed as a monolithic component, in some examples.

Valve 20 is configured to transition between an open state or the closed state within AFSO 16. When valve 20 is in the open state, AFSO channel 18 has free fluid communication within AFSO housing 72 between AFSO intake 78, AFSO bore 80, and lubricant port 82. AFSO channel 18 is disposed within AFSO housing 72 and is disposed downstream with respect to AFSO intake 78. AFSO channel 18 is disposed within AFSO housing 72 and is configured to direct the flow of the lubricant. AFSO intake 78 is disposed on an upstream end (with respect to the direction of flow) of AFSO channel 18, and AFSO intake 78 is disposed on AFSO side 76. In some examples, AFSO intake 78 is disposed on AFSO top 74. AFSO intake 78 is configured to connect to a line, such as a hose, to receive the lubricant from an upstream lubricant source. Lubricant port 82 is disposed on AFSO side 76 as well. Lubricant port 82 can connect AFSO intake 78 and AFSO bore 80. When valve 20 is in the open state, lubricant port 82 is in fluid communication with AFSO intake 78 and AFSO bore 80. Valve 20 is disposed downstream along the direction of flow through AFSO 16 with respect to AFSO intake 78. Further, when valve 20 is in the open state, AFSO intake 78 is in fluid communication with AFSO bore 80.

AFSO bore 80 is disposed within AFSO housing 72 at a downstream end of AFSO channel 18. AFSO bore 80 extends into AFSO housing 72 from a bottom of AFSO 16. AFSO bore 80 is disposed downstream along the direction of flow through AFSO channel 18 with respect to both valve 20 and AFSO intake 78. AFSO bore 80 is configured to interface with fill tube 28.

Fill tube 28 is connected to AFSO 16 at AFSO bore 80. For example, fill tube 28 can be connected to AFSO 16 by interfaced threading, among other options (e.g., fasteners, bayonet connection, press fit, etc.). Fill tube 28 can be at least partially disposed within AFSO 16 at an interfacing with AFSO bore 80. Fill tube 28 can be supported by AFSO housing 72. In some examples, fill tube 28 is supported within reservoir housing 30 from reservoir housing top 102. Fill tube 28 extends into reservoir housing 30. Fill tube 28 is configured to transmit lubricant from AFSO 16 to a location within reservoir housing 30 disposed on an opposite side of follower 36 from AFSO 16 along fill tube axis FA. Fill tube entrance 94 is configured to receive the lubricant into fill tube 28 from AFSO channel 18 at AFSO bore 80. Fill tube entrance 94 is disposed at first tube end 95 of fill tube 28.

Disposed at least partially within fill tube 28 is sensor assembly 22. Sensor assembly 22 includes sensor tube 24, sensors 26 disposed within sensor tube 24, mount plate 68, sensor tube end 90 disposed at an end of sensor tube 24, sensor tube surface 92, and sensor relay 40 disposed at a top of sensor assembly 22. Although sensor tube 24 is at least partially disposed within AFSO 16, sensor tube 24 can in some examples only be in contact with static seal 64 within AFSO housing 72, and not interface directly with AFSO housing 72. Static seal 64 is disposed within and supported by AFSO housing 72. Static seal 64 prevents lubricant from leaking between AFSO housing 72 and sensor tube 24.

In the example shown, sensor tube 24 interfaces with only static sealing components and not dynamic sealing components that are configured to slide along and seal against sensor tube surface 92. Sensor tube surface 92 is an exterior surface of sensor tube 24. In the example shown, sensor tube surface 92 can comprise a 32-microinch surface finish that is suitable for static sealing with static seal 64 and does not require more stringent or fine surface finishes that are required to seal at dynamic sealing interfacings. For example, a surface finish may require a 16-microinch surface finish to seal with a dynamic seal. Sensor tube 24 sealing with only static sealing components (e.g., static seal 64) reduces cost and manufacturing time by allowing for use of a less fine surface finish. In some examples there need only comprise a single static seal (e.g., static seal 64) to interface with sensor tube 24. Further, in the example shown, sensor tube 24 does not interface with a dynamic seal. As shown in FIGS. 3A-3B, sensor tube end 90 is closed off so as to prevent interfacing between the lubricant and sensors 26. Sensor tube 24 is sealed from the lubricant such that lubricant does not enter into sensor tube 24.

In some examples, sensor assembly 22 can extend out AFSO top 74. As such, sensor assembly 22 can extend fully through AFSO 16 through both top and bottom ends of AFSO housing 72. AFSO top 74 can interface with a bottom of mount plate 68. Mount plate 68 projects outward from sensor tube 24. Sensor assembly 22 can attach to AFSO housing 72 via fasteners 70 secured through mount plate 68 and attached to AFSO housing 72. It is understood that while the example shown includes a plurality of fasteners 70, not all examples are so limited. Further, fasteners 70 can comprise any sort of fasteners known by those of ordinary skill in the art, including but not limited to screws, nails, bolts, rivets, threaded rods, etc. Extending from a top of sensor tube 24 is sensor relay 40. Sensor relay 40 in some examples can be a wired connector for data communication. In other examples, sensor relay 40 can be an antenna configured to communicate with control 42 (shown in FIG. 1). Data that is communicated through sensor relay 40 is received from sensors 26 disposed within sensor tube 24.

Sensors 26 are disposed within sensor tube 24 and arrayed along the length of sensor tube 24. It is understood that sensors 26 disposed within sensor tube 24 can comprise multiple sensors 26. Sensors 26 are configured to generate signals (or stop generating a signal) in response to the magnetic fields generated by magnetic indicator 38. For example, sensors 26 can include one or more of reed switches, hall effect sensors, coiled sensors, or magnetoresistive elements, among other options. As shown in FIGS 3A-3B, although sensor tube 24 is at least partially disposed within fill tube 28, sensor tube 24 is not in contact, or does not interface, with fill tube 28. However, in some examples sensor tube 24 can be in contact with fill tube 28, such as a length of sensor tube surface 92 being in contact on a single side with a length of fill tube interior surface 98 so as to place sensors 26 in closer proximity to a particular portion of magnetic indicator 38 and/or create a wider gap at various locations between sensor tube 24 and fill tube 28 for the lubricant to flow through. Both fill tube 28 and sensor tube 24 extend through AFSO bore 80 and downward into reservoir housing 30. In the example shown, sensor tube 24 extends fully through fill tube 28 such that sensor tube 24 projects out of both a first tube end 95 connected to AFSO housing 72 and second tube end 97 disposed within reservoir housing 30.

Reservoir housing 30 includes reservoir housing top 102, reservoir housing side wall 104, weep hole 106 disposed through reservoir housing side wall 104, housing dry portion 108, and housing wet portion 110. Reservoir housing 30 supports AFSO 16. Disposed at least partially within reservoir housing 30 is lubricant chamber 34. Both fill tube 28 and sensor assembly 22 extend downward into reservoir housing 30, and can at least partially extend into lubricant chamber 34. Lubricant chamber 34 defines an available volume that the lubricant can occupy. The volume of lubricant chamber 34 can be considered to vary as follower 36 moves with the lubricant, in the example shown. Disposed within reservoir housing 30 is follower 36. Fill tube exit 96 is disposed at second tube end 97 of fill tube 28 and is configured to output the lubricant into lubricant chamber 34.

The lubricant that enters lubricant chamber 34 will raise follower 36 within reservoir housing 30. Follower 36 is disposed around fill tube 28, and is configured to stay on a top of the lubricant that fills lubricant chamber 34. Follower 36 generally separates reservoir housing into housing dry portion 108 and housing wet portion 110, wherein housing dry portion 108 is disposed above follower 36, and housing wet portion 110 is disposed beneath follower 36.

Follower 36 is configured to be in sliding communication with fill tube 28 and to rise and fall with the lubricant fill level. Follower 36 supports inner seal 60. Inner seal 60 interfaces with fill tube exterior surface 100. Inner seal 60 is formed as a dynamic seal in the example shown as inner seal 60 slides along the fill tube exterior surface 100 as follower 36 moves relative to fill tube 28. In the example shown in FIGS 3A-3B follower 36 extends to reservoir housing side wall 104. In these examples, follower 36 supports outer seals 114, and outer seals 114 interface with and is configured to be in sliding communication with reservoir housing side wall 104. It is understood that outer seals 114 can comprise a plurality of outer seals 114 or a single outer seal 114. Multiple outer seals 114 can maintain greater flexibility and ability to adjust to varying circumstances than a single and very thick outer seal 114, while also providing greater traction at an interfacing between reservoir housing side wall 104 than a single and thin outer seal 114. The multiple outer seals 114 can provide a first outer seal that prevents lubricant leakage between follower 36 and reservoir housing 30 and a backup outer seal in case there is some lubricant leakage past the first seal.

Vent valve 116 is disposed at least partially within follower 36. As follower 36 rises and falls with a fill level of the lubricant, housing wet portion 110 disposed beneath follower 36 has potential to create a vacuum. Vent valve 116 is configured to allow air to travel above or below follower 36 without allowing the lubricant to travel therethrough. Vent valve 116 allows air to flow from housing dry portion 108 to housing wet portion 110 when open and as the lubricant level continues to drop below the lowest level of travel of follower 36. Vent valve 116 is configured to be shifted to a closed state by the rising lubricant and air within housing wet portion 110 can vent to housing dry portion 108 through vent valve 116. In the examples shown, lubricant pump assembly 10 includes weep hole 106 disposed through reservoir housing side wall 104. Weep hole 106 is configured to allow air to enter or to exit reservoir housing 30. In cases of AFSO 16 failure or overfill, weep hole 106 can act as a pressure relief to prevent damage to reservoir housing 30. In examples that do not include AFSO 16, weep hole 106 also allows lubricant to leak out of reservoir housing 30 to provide a visual indication that lubricant chamber 34 is full, such as when filling through lubricant port 82.

Furthermore, follower 36 has only a single opening or a single guide bore 112 that is configured to allow a solid object, column, pipe, tube, or pillar-like structures to extend therethrough. Guide bore 112 is disposed fully through follower 36. Sensor tube 24 and fill tube 28 both extend through the single hole or guide bore 112 on follower 36. Inner seal 60 is supported by follower 36 and is disposed within guide bore 112 and interfaces with fill tube exterior surface 100 to be in sliding communication with follower 36. Inner seal 60 forms a dynamic sealing interface with fill tube 28. In the example shown, there is no sealing interface formed directly between follower 36 and sensor tube 24.

Extending downward from reservoir housing top 102 is spring 62 which is configured to bias follower 36 downward. The spring bias aids extraction of the lubricant from lubricant pump assembly 10. For example, grease can be very viscous and not flow easily. Spring 62 can push follower 36 such that follower 36 can assist in driving the grease out of lubricant pump assembly 10. Further, including spring 62 can aid in keeping follower 36 from becoming stagnant if follower 36 were to get stuck at an interfacing between reservoir housing side wall 104 and outer seals 114.

Supported by follower 36 is magnetic indicator 38 which surrounds fill tube 28. Because sensor tube 24 is disposed within fill tube 28, magnetic indicator 38 will send magnetic fields through fill tube 28 to reach sensors 26 disposed within sensor tube 24. Fill tube 28 is formed from a non-ferrous material (e.g., aluminum among other options) such that the material of fill tube 28 does not interfere with the magnetic fields, allowing for greater accuracy in the signals generated by sensors 26. Sensors 26 are configured to be triggered by the magnetic fields from magnetic indicator 38, and the triggered ones of sensors 26 are configured to send information about the fill level of lubricant chamber 34 out through sensor relay 40 to control 42 (shown in FIG. 1).

Lubricant chamber 34 can be at least partially defined by or partially disposed within base 32. Reservoir housing 30 is supported by base 32. Base 32 defines base wet portion 118 and base dry portion 120. Base wet portion 118 includes lubricant chamber 34 which the lubricant can enter and occupy. At an intersection between reservoir housing 30 and base 32 is ricer plate 50. Ricer plate 50 can be configured to separate or thin out lubricant prior to the lubricant reaching the one or more outlet pumps 44. Ricer plate 50 can be disposed at a lower portion of lubricant chamber 34 so as to thin out lubricant just before extraction by outlet pumps 44. Disposed above ricer plate 50 and at a bottom of reservoir housing 30 is stir assembly 58. Stir assembly 58 is configured to assist in flow of the lubricant to travel down and out of lubricant pump assembly 10.

Stir assembly 58 is connected to drive shaft 54. Drive shaft 54 is disposed within base dry portion 120 and can partially be disposed within base wet portion 118 and/or housing wet portion 110. Drive shaft 54 interfaces with bearing 56 and extends through ricer plate 50. At a bottom end of drive shaft 54, drive shaft 54 interfaces with motor 52. Motor 52 is disposed within base dry portion 120 and is configured to interact with drive shaft 54 to turn stir assembly 58. Drive shaft 54 is further configured to power pumping by the one or more outlet pumps 44. For example, a cam on drive shaft 54 can power pumping. It is understood that some examples do not include stir assembly 58 such that drive shaft 54 powers pumping but does not drive stir assembly 58.

In the examples shown in FIGS. 3A-3B, outlet pump 44 is disposed within base wet portion 118. It is understood that base can include a plurality of outlet ports 45 and need not be confined to a single outlet ports 45. Further, it is understood that outlet pumps 44 need not be disposed within base wet portion 118. Outlet pump 44 is configured to drive the lubricant out of lubricant pump assembly 10 and disperse the lubricant to lubricated component 48 (shown in FIG. 1). It is understood that lubricant pump assembly 10 can include a plurality of outlet pumps 44. For example, separate outlet pumps 44 can be configured to pump lubricant to different lubricated components 48. The example shown includes three outlet ports 45 and can have three outlet pumps 44, but it is understood that other numbers of ports and pumps are possible.

Locator 124 interfaces with fill tube 28 and sensor tube 24. Locator 124 interfaces with the second tube end 97 and sensor tube end 90, and is configured to align fill tube 28. Locator 124 aligns fill tube 28 and holds second tube end 97 opposite first tube end 95 connected to AFSO housing 72. In the example shown, a portion of locator 124 extends into fill tube 28 such that a portion of fill tube 28 is disposed directly radially outward of locator 124. Locator 124 further locates sensor tube 24 relative to fill tube 28. Locator 124 can maintain concentricity of sensor tube 24 relative to fill tube 28. In the example shown, sensor tube 24 extends into locator 124 such that the sensor tube end 90 is disposed within locator 124. Locator 124 can, in some examples, be configured to ride on stir assembly 58 but not rotate with stir assembly 58.

To use lubricant pump assembly 10, the lubricant is pumped through AFSO intake 78. The lubricant then travels through ASFO channel 18 to AFSO bore 80 within AFSO housing 72. The lubricant will then come in contact with sensor tube surface 92 of sensor tube 24 and travel down fill tube 28, starting at fill tube entrance 94, while surrounding sensor tube 24 which is disposed within fill tube 28. Because a pump is not drawing lubricant from fill tube 28, the enclosed space within fill tube 28 will not have as high of a pressure due to the non-present pump. This allows for flexibility in placing more delicate versions of sensor tube 24 within fill tube 28 without cause for concern of damaging sensor tube 24. Further, having AFSO 16 disposed at an entrance of fill tube entrance 94 allows for additional safety for sensor tube 24 to be placed within fill tube 28 because once lubricant pump assembly 10 reaches a full state, AFSO 16 will enter a closed state and the lubricant will cease flowing to an area surrounding sensor tube 24.

The lubricant will exit fill tube 28 at fill tube exit 96 and enter lubricant chamber 34 beneath follower 36. As lubricant chamber 34 fills with the lubricant, the lubricant will begin to raise follower 36 within reservoir housing 30. As the height of follower 36 raises, or lowers as lubricant is drawn from lubricant chamber 34, magnetic indicator 38 will trigger sensors 26 disposed within sensor tube 24, and depending on a variable output from sensors 26, such as various voltage levels when in contact with magnetic fields, signals are sent out through sensor relay 40 to communicate what the lubricant fill level is within reservoir housing 30. The lubricant can then be drawn out of lubricant chamber 34 through activating the one or more outlet pumps 44 to draw the lubricant out through outlet ports 45 to be supplied for and used on lubricated components 48. The falling magnetic indicator 38 triggers sensors 26 which provide signals indicating the falling lubricant level.

When filling lubricant chamber 34 with the lubricant and follower 36 reaches a maximum capacity within reservoir housing 30, follower 36 will interface with pin 88 causing valve stem 84 to interface with valve seat 86 and will thus place valve 20 in the closed state to cease intake of the lubricant. When valve 20 is placed in the closed state, as opposed to an open state in which the lubricant can freely flow into lubricant pump assembly 10 and into lubricant chamber 34, valve stem 84 also rises into signal indicator 21 to provide a visual indication that lubricant pump assembly 10 is full.

Lubricant pump assembly 10 provides significant advantages. Having sensor tube 24 within fill tube 28 provides fewer points of contact or pinch points to cause leakage at dynamic interfaces with follower 36. In the example shown, there is only the single hole or single guide bore 112 for both sensor tube 24 and fill tube 28 to extend through, and only a single dynamic interface between follower 36 and fill tube 28. When follower 36 travels up and down reservoir housing 30 with a varying lubricant level, each tube, column, pillar, or pipe that extends through the follower needs to be aligned with the follower 36 otherwise follower 36 can catch and either bind or push through and cause damage to the tubes or system as a whole. With the present disclosure having sensor tube 24 within fill tube 28, this eliminates needing to align both sensor tube 24 and fill tube 28 at different guide bores within follower 36 and reduces potential damage, thus reducing costs and simplifying operation. In the examples shown, follower 36 does not include multiple guide bores. With a single through-hole on follower 36 (e.g., guide bore 112), it is easier to seal because only inner seal 60 is needed at a single interfacing between follower 36 and potential tubes, columns, pillars, or pipes that travel therethrough, which means fewer seals that can go bad and a lessened possibility for leaks, which improves life of lubricant pump assembly 10 and reduces costs.

Having sensor tube 24 disposed within fill tube 28 makes it so there are fewer objects that travel through follower 36. In examples with follower plates that accommodate multiple tubes at various through-holes on these follower plates, unless every tube is perfectly aligned orthogonally to these follower plates, then there is easy potential for binding and pinch points, wherein these follower plates would either get stuck and cease to perform their proper function, or to plow through and cause leaks due to damage to tubes or to these follower plates.

Further, having sensor tube 24 disposed within fill tube 28 and only having a singular through-hole or single guide bore 112 within follower plate 36 means that follower 36 does not need to be as thick as the follower plates accommodating multiple tubes therethrough at multiple openings therethrough. The very thick follower plates are configured to forcefully align or straighten each of a plurality of tubes that extend through various through-holes on these follower plates to prevent binding. Having the singular through-hole for both fill tube 28 and sensor tube 24 to travel through not only reduces potential for binding or damage, but also allows for a thinner follower plate 36 that minimizes bulkiness of design, makes lubricant pump assembly 10 less cumbersome, makes lubricant pump assembly 10 as a whole cost less due to less material, and further allows for lubricant pump assembly 10 to take up less space on a machine that a user may store lubricant pump assembly 10 in.

Because the lubricant can be a viscous fluid, it can be difficult for the lubricant to travel in between sensor tube 24 and fill tube 28 because of flow restriction. Providing a ratio of at least 10:7 for a diameter of an interior surface of fill tube 28 (fill tube interior surface 98) to a diameter of an exterior surface of sensor tube 24 (sensor tube surface 92) allows for flow that will not impede operation of lubricant pump assembly 10 including filling and removing of the lubricant. A ratio of at least 10:7 allows for enough room around sensor tube 24 without flow restriction, backpressure, or resistance.

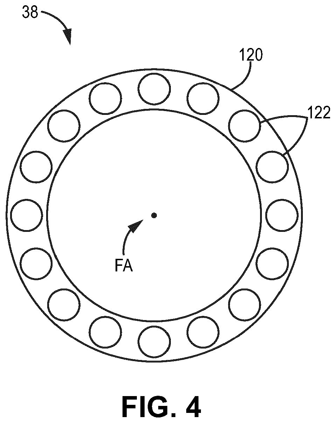

FIG. 4 is a plan view of an example of magnetic indicator 38. In this example, magnetic indicator 38 includes indicator body 120, which can be formed as a ring configured to extend around fill tube 28 and around sensor tube 24. Indicator body 120 can be formed from non-ferrous material. Multiple magnets 122 are supported by indicator body 120. In the example shown, magnetic indicator 38 includes a plurality of discrete permanent magnets 122. The permanent magnets 122 can be mounted to and, in some examples, disposed at least partially within, the indicator body 120. To improve accuracy of fill level readings, it is helpful to tune the magnet strength of magnetic fields of magnetic indicator 38 by including more or less magnets 122. This is because magnetic fields need to travel through a thickness of fill tube 28, the lubricant that occupies a flow gap between fill tube interior surface 98 and sensor tube surface 92, and through a thickness of sensor tube 24 until sensors 26 are reached. Magnetic indicator 38 is disposed radially outside of fill tube 28 with respect to fill tube axis FA and is spaced from sensor tube 24 by a gap comprising the thickness of fill tube 28 and the flow gap.

The annular array of permanent magnets 122 can provide the desired magnetic strength for triggering of sensors 26. It is understood that in various other examples, magnetic indicator 38 can include an annular permanent magnet (e.g., a single permanent magnet) or a plurality of magnets 122. If the magnetic fields generated by magnetic indicator 38 are too strong it can cause sensors 26 to give inaccurate readings. At the same time, the magnetic fields generated by magnetic indicator 38 need to be strong enough to travel through fill tube 28 and across the gap between fill tube 28 and sensor tube 24 to reach and trigger the sensors 26.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A lubricant pump assembly comprising:
a base;
a reservoir housing supported by the base;
a lubricant chamber disposed at least partially within the reservoir housing;
a follower disposed within the reservoir housing, the follower configured to rise and fall with a lubricant fill level within the lubricant chamber;
a fill tube extending downward from a reservoir housing top, the fill tube having a first tube end and a second tube end, wherein the fill tube extends through the follower and the fill tube is configured to output the lubricant into the lubricant chamber;
a sensor assembly including a sensor tube having a plurality of sensors disposed within
the sensor tube, the sensor tube disposed at least partially within the fill tube; and a magnetic indicator supported by the follower such that the magnetic indicator moves
with the follower relative to the sensor tube and the fill tube, wherein the magnetic indicator is configured to trigger the plurality of sensors to cause the plurality of sensors to output signals indicative of the lubricant fill level.

2. The lubricant pump assembly of claim 1, further comprising a spring disposed within the reservoir housing, the spring interfacing with the follower to bias the follower downward within the reservoir.

3. The lubricant pump assembly of any one of claims 1 and 2, wherein the follower does not include multiple guide bores.

4. The lubricant pump assembly of any one of claims 1-3, further comprising an auto-fill shut off assembly disposed on the reservoir housing top, the auto-fill shut off assembly comprising:
an AFSO housing wherein the AFSO housing defines a lubricant pathway that comprises an AFSO intake and an AFSO bore; and
a valve disposed within the AFSO housing.

5. The lubricant pump assembly of claim 4, wherein the fill tube is mounted to the AFSO housing.

6. The lubricant pump assembly of claim 5, wherein the sensor tube extends into the AFSO housing.

7. The lubricant pump assembly of any of claims 4-6, wherein the sensor tube extends out of the first tube end of the fill tube and fully through the AFSO housing.

8. The lubricant pump of any preceding claim, wherein the sensor tube does not interface with a dynamic seal.

9. The lubricant pump of any one of claims 4-8, wherein the sensor tube interfaces with a single static seal disposed within and supported by the AFSO housing.

10. The lubricant pump assembly of any preceding claim, wherein the sensor tube and the fill tube are disposed coaxially.

11. The lubricant pump assembly of any preceding claim, wherein the magnetic indicator comprises a plurality of magnets disposed within a non-ferrous ring.

12. The lubricant pump assembly of any preceding claim, wherein the sensor tube is closed off at a sensor tube end within the lubricant chamber.

13. The lubricant pump assembly of any preceding claim, wherein the magnetic indicator is disposed radially outside of the fill tube and is spaced from the sensor tube by a gap comprising a thickness of the fill tube and a flow gap defined by a distance between the exterior surface of the sensor tube and the interior surface of the fill tube.

14. The lubricant pump of any preceding claim, further comprising a locator disposed at the second tube end, the locator interfacing with the fill tube and the sensor tube to concentrically align the sensor tube and the fill tube.

15. A method of determining a lubricant fill level within a lubricant pump assembly, the method comprising:
flowing a lubricant into the lubricant pump assembly;
flowing the lubricant down a space between an interior of a fill tube and an exterior of a sensor tube;
releasing the lubricant out from the fill tube and into a lubricant chamber;
raising a follower plate disposed within a reservoir housing of the lubricant pump assembly via the lubricant beneath the follower plate; and
sensing the lubricant fill level within the reservoir housing by signals received from a plurality of sensors disposed within the sensor tube, wherein a magnetic indicator supported by the follower plate triggers the plurality of sensors disposed within the sensor tube to output the signals.
